# EUROPEAN PATENT APPLICATION

(11) **EP 3 793 019 A1**
(43) Date of publication of application: **17.03.2021**
(21) Application number: 20194903.9
(22) Date of filing: 07.09.2020
(51) Int. Cl.: H01M 50/20, H01M 50/50, H01M 10/6554

(54) **BATTERY SYSTEM OF AN ELECTRIC VEHICLE**

(30) Priority: 10.09.2019 US 201962898301 P
(71) Applicant: Proterra Inc., Burlingame, CA 94010 (US)
(72) Inventor: HERRON, Nicholas H., Pacifica, CA California 94044 (US); PAUL, Derek R., Redwood City, CA California 94061 (US); GRACE, Dustin, San Francisco, CA California 94107 (US)
(74) Representative: Weldon O'Brien Ltd.

(57) **Abstract**

A modular and scalable battery module wherein the energy capacity and voltage output are configured to be scaled independent of each other. A battery module has battery cassettes (702) removably coupled together to form a battery block (502). A first set of battery cassettes of the is electrically connected together in parallel to form a first parallel-connected brick of battery cells. A second set of battery cassettes of the plurality of battery cassettes is electrically connected together in parallel to form a second parallel-connected brick of battery cells. Electrical collection plates (602) connect the first and second parallel-connected bricks of battery cells in series. Each battery cell in the battery module is arranged such that a positive terminal of the battery cells are oriented in a same direction.

## Description

### TECHNICAL FIELD

Embodiments of this disclosure relate to battery systems.

### BACKGROUND

An electric vehicle (EV), also referred to as an electric drive vehicle, uses an electric motor for propulsion. Electric vehicles may include all-electric vehicles where the electric motor is the sole source of power, and hybrid electric vehicles that include an auxiliary power source in addition to the electric motor. In an electric vehicle, energy may be stored in a rechargeable battery system that includes multiple battery cells to power the electric motor. The battery system typically includes a plurality of battery packs that each include a plurality of battery modules. Each battery module includes multiple battery cells. Standard battery packs use fixed size modules to create battery packs.

Battery modules are the base building blocks of a battery pack. A battery module includes multiple battery cells connected together in parallel. Typically, a battery module is not sub-dividable and is not easy to scale up or down in size. In a battery pack, the battery modules are connected together in series to build their full voltage and capacity. The configuration of a typical battery system includes changes in capacity (e.g., energy) intrinsically linked to step changes in voltage. That is, a change in the energy capacity, or stored energy, of a battery system results in a corresponding change in the battery system voltage. For example, early Tesla Model S85 and S60 have 85kW-hr and 60kW-hr packs, respectively. The S85 has 16 battery modules connected in series for 400V pack voltage, and the S60 has 14 battery modules connected in series for 350V pack voltage. High voltage drivetrains of electric vehicles are designed to work in narrow voltage ranges, so there is limited ability to increase/decrease system voltage.

### SUMMARY

Embodiments of the current disclosure disclose battery systems that address some of the above-described limitations. In some embodiments, the disclosed battery system includes an easily scalable battery module that can be scaled in voltage and capacity, independently. Thus, battery packs and battery systems that are comprised of such scalable battery modules can be scaled in battery pack voltage and capacity independently. In some embodiments, the disclosed battery module includes a smaller battery module building block, or a cassette, that includes a collection of cells. These cassettes have features that allow them to easily connect in integer numbers to create larger/smaller battery modules. The scope of the current disclosure, however, is defined by the attached claims, and not by the ability to solve any specific problem.

We describe a battery module, comprising:
a plurality of battery cassettes removably coupled together to form a battery block, wherein each battery cassette includes a plurality of battery cells positioned therein;
a first set of battery cassettes of the plurality of battery cassettes electrically connected together in parallel to form a first parallel-connected brick of battery cells;
a second set of battery cassettes of the plurality of battery cassettes electrically connected together in parallel to form a second parallel-connected brick of battery cells; and
a plurality of electrical collection plates connecting the first and second parallel-connected bricks of battery cells in series.
Preferably, each battery cell in the battery module are arranged such that a positive terminal of the battery cells are oriented in a same direction.

Preferably, a negative terminal of each battery cell of the battery module is in thermal contact with a cold plate.
Preferably, the first and second set of battery cassettes include the same number of cassettes. Preferably, a number of battery cassettes in the first and second parallel-connected bricks of battery cells is configured to be changed by changing a number of the plurality of electrical collection plates.
Preferably, each battery cassette of the plurality of battery cassettes includes twelve battery cylindrical cells positioned therein.
Preferably, each battery cassette of the plurality of battery cassettes includes first engagement features that engage with another battery cassette of the plurality of battery cassettes to removably couple the two battery cassettes together.

Preferably, each battery cassette of the plurality of battery cassettes includes second engagement features that engage with one or more electrical connection plates of the plurality of electrical collection plates to couple the one or more electrical connection plates to the battery cassette.

We also describe a method of fabricating a battery module comprising:
coupling a plurality of substantially identical battery cassettes together to form a battery block having a first energy capacity, wherein each battery cassette includes a plurality of battery cells positioned therein;
electrically connecting the battery cells of a first set of battery cassettes of the plurality of battery cassettes in parallel to form a first parallel-connected brick of battery cells;
electrically connecting the battery cells of a second set of battery cassettes of the plurality of battery cassettes in parallel to form a second parallel-connected brick of battery cells; and
electrically connecting the first and second parallel-connected bricks of battery cells in series to form the battery module having a first voltage output.

Preferably, the method includes changing a number of battery cassettes in the first and second parallel-connected bricks of battery cells to change the voltage output of the battery module. Preferably, the method includes increasing a number of battery cassettes removably coupled together in the plurality of battery cassettes to increase the energy capacity of the battery module. Preferably, the method includes decreasing a number of battery cassettes removably coupled together in the plurality of battery cassettes to decrease the energy capacity of the battery module.
Preferably, the method includes further including inserting a plurality of battery cells in a casing to form a battery cassette of the plurality of battery cassettes.

We also describe a battery block, comprising
a plurality of identical battery cassettes physically coupled together, and each battery cassette includes a plurality of battery cells positioned therein;
a first set of battery cassettes of the plurality of battery cassettes electrically connected together in parallel to form a first parallel-connected brick of battery cells;
a second set of battery cassettes of the plurality of battery cassettes electrically connected together in parallel to form a second parallel-connected brick of battery cells; and
a plurality of electrical collection elements connecting the first and second parallel-connected bricks of battery cells in series, wherein
the electrical collection elements are configured for the addition or subtraction of more or less electrical collection elements as a function of adding or subtracting battery cassettes from the block.

Preferably, the plurality of electrically collection elements include a first set of electrically collection elements and a second set of electrically collection elements, wherein
an electrical collection element of the first set of electrically collection elements connect the battery cells of the first set of battery cassettes in parallel to an electrical connection element of the second set of electrical connection elements to form the first parallel-connected brick of battery cells, and
the electrical connection element of the second set of electrical connection elements connect the first parallel-connected brick of battery cells in series to the second parallel-connected bricks of battery cells.
Preferably, the electrical collection elements include at least one of an electrical collection plate or an electrically conductive foil.
Preferably, the electrical collection elements have the same shape.
We also describe a method of fabricating a battery block, comprising:
coupling a plurality of battery identical cassettes together to form an array of battery cassettes, the number of coupled cassettes being selected based on a desired energy capacity;
selecting from a plurality of different sized electrical collection elements based on a desired voltage of the block; and
coupling the battery cassettes with the electrical collection elements to form a serial electrical connection.
Preferably, the different sized electrical collection elements are similarly shaped.
Preferably, the method further includes:
electrically connecting a first set of battery cassettes of the array of battery cassettes in parallel to form a first parallel-connected brick of battery cells, and
electrically connecting a second set of battery cassettes of the array of battery cassettes in parallel to form a second parallel-connected brick of battery cells.

Preferably, coupling the battery cassettes to form a serial electrical connection includes electrically connecting the first parallel-connected brick of battery cells in series with the second parallel-connected brick of battery cells.
Preferably, the method includes changing a number of battery cassettes in the first and second sets of battery cassettes to change the voltage output of the battery module.

### BRIEF DESCRIPTION OF THE DRAWINGS

The accompanying drawings, which are incorporated in and constitute a part of this specification, illustrate exemplary embodiments of the present disclosure and together with the description, serve to explain the principles of the disclosure. Each of the embodiments disclosed herein may include one or more of the features described in connection with any of the other disclosed embodiments.
FIG. 1A illustrate an exemplary electric vehicle having a battery system according to some embodiments of the present disclosure.
FIG. 1B illustrates an exemplary battery system of the electric vehicle of FIG. 1A.
FIG. 2 is a schematic arrangement of battery packs in a battery system according to an exemplary embodiment.
FIG. 3 illustrates an exemplary battery module.
FIG. 4A is a perspective view of a battery block of the battery module of FIG. 3.
FIG. 4B is an exploded view of the battery block of FIG. 4A.
FIGS. 5A-5C pictorially illustrate the method of assembling a battery block by building up an array of cassettes. The block is a sub-component of the battery module of FIG. 3.
FIGS. 6A-6F are different views of the battery block of FIG. 4A.
FIGS. 7A-7B are schematic illustrations of fabricating battery blocks having the same energy capacity and different voltage outputs according to an exemplary embodiment.
FIGS. 8A-8C are schematic illustrations of fabricating battery blocks having the same energy capacity and different voltage outputs according to another exemplary embodiment.
FIG. 9 is a schematic illustration of scaling the energy capacity of battery packs and battery modules.

### DETAILED DESCRIPTION

The present disclosure describes the battery system of an electric vehicle. While principles of the current disclosure are described with reference to a battery system of an electric vehicle, it should be understood that the disclosure is not limited thereto. Rather, the battery systems of the present disclosure may be used in any application (electric machine, electric tool, electric appliance, etc.). In this disclosure, relative terms, such as "about," "substantially," or "approximately" are used to indicate a possible variation of ±10% in the stated value. Any implementation described herein as exemplary is not to be construed as preferred or advantageous over other implementations. Rather, the term "exemplary" is used in the sense of example or illustrative.

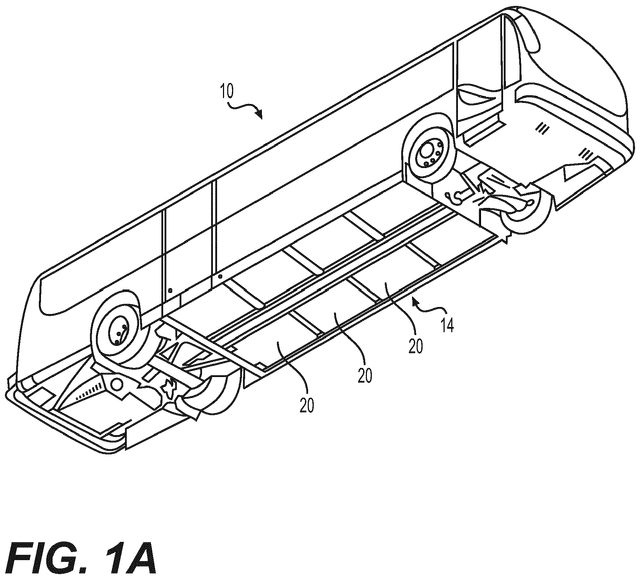

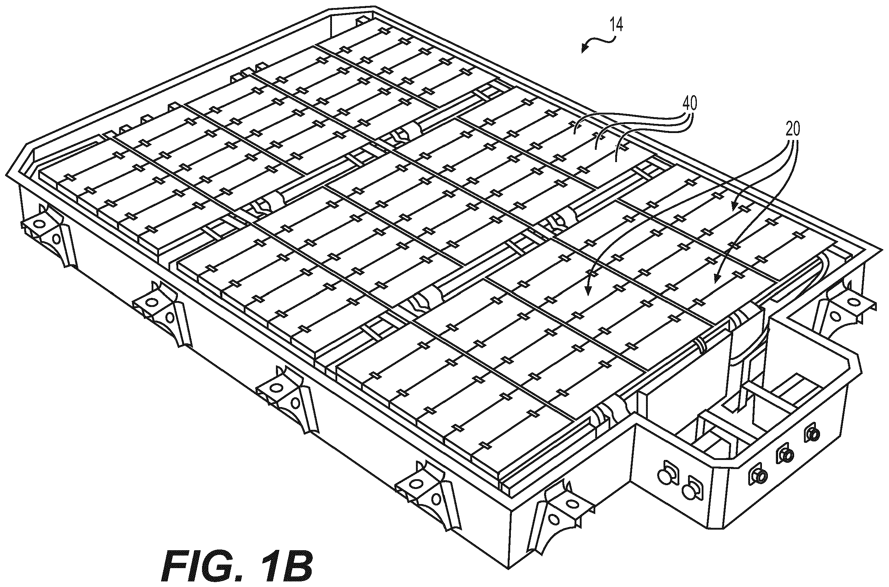

FIG. 1A illustrates an electric bus 10 having a battery system 14. The battery system 14 includes a plurality of battery packs 20 positioned under the floor of the vehicle. Although the battery packs 20 are illustrated as being positioned under the floor, as would be recognized by a person skilled in the art, these battery packs 20 may be placed anywhere on the vehicle. Additionally, although a bus 10 is illustrated, battery system 14 may be included in any electric vehicle, energy storage device, or another application. FIG. 1B illustrates an exemplary battery system 14 with battery packs 20 in some embodiments. As can be seen in FIG. 1B, each battery pack 20 may be comprised of battery modules 40. The battery modules 40 are building blocks of the battery pack 20, and each battery module 40 includes multiple battery cells connected together in parallel and in series. The battery cells may be rechargeable battery cells having any suitable configuration (cylindrical, prismatic, etc.), and have any chemistry (lithium-ion, nickel cadmium, etc.).

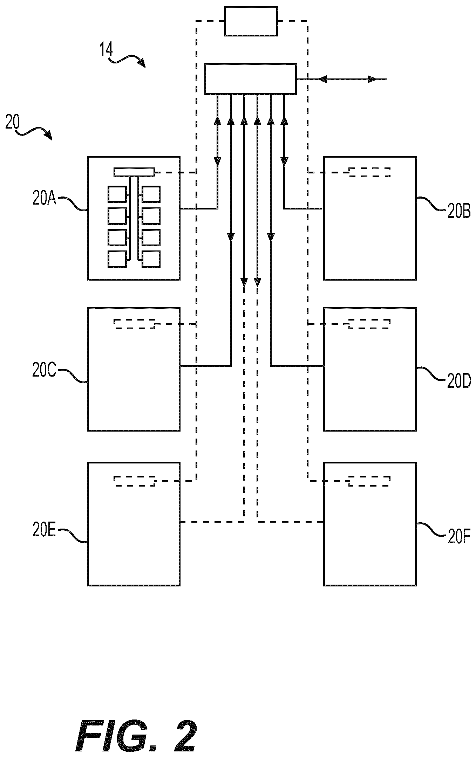

FIG. 2 illustrates an exemplary configuration of the battery system 14. In general, battery system 14 may include a plurality of battery packs 20 connected together in series and/or in parallel. FIG. 2 illustrates six battery packs 20A, 20B, 20C, 20D, 20E, and 20F (collectively referred to as battery packs 20) electrically connected to a junction in parallel. While six battery packs 20 are shown in FIG. 2, it is understood that any number of battery packs 20 may be included in the battery system 14. As shown in the illustration of battery pack 20A of FIG. 2, each battery pack 20 may include a plurality of battery modules 40. Each battery module 40 may include an enclosure that houses a plurality of battery cassettes ("cassettes") arranged to form battery bricks, and battery blocks, as will be described below. The cassette may form the building block of a battery module 40 and may include a plurality of battery cells electrically connected together (as will be described below). In some embodiments, multiple cassettes may be electrically connected together to form the battery module 40. In some embodiments, multiple cassettes may be connected together in parallel and these parallel-connected cassettes connected together in series to form module 40. As will be explained below, the capacity and/or voltage of the battery module 40 may be changed by changing (i.e., increasing, decreasing, etc.) the number of cassettes in the battery module 40 and/or by changing the electrical connection of the cassettes (e.g., number of cassettes connected together in parallel and series, etc.) in the module 40. As would be recognized by an ordinary skilled artisan, battery system 14 includes many other components (controllers, fuses, etc.) that are not described here.

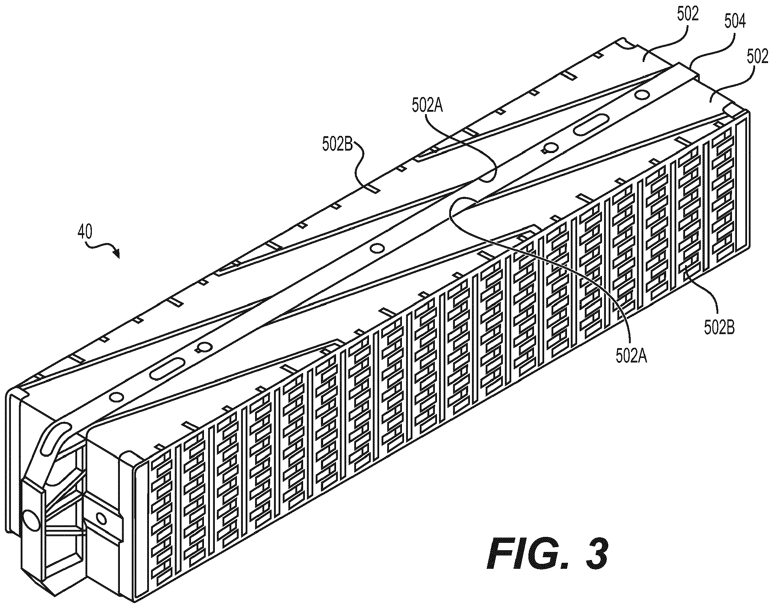

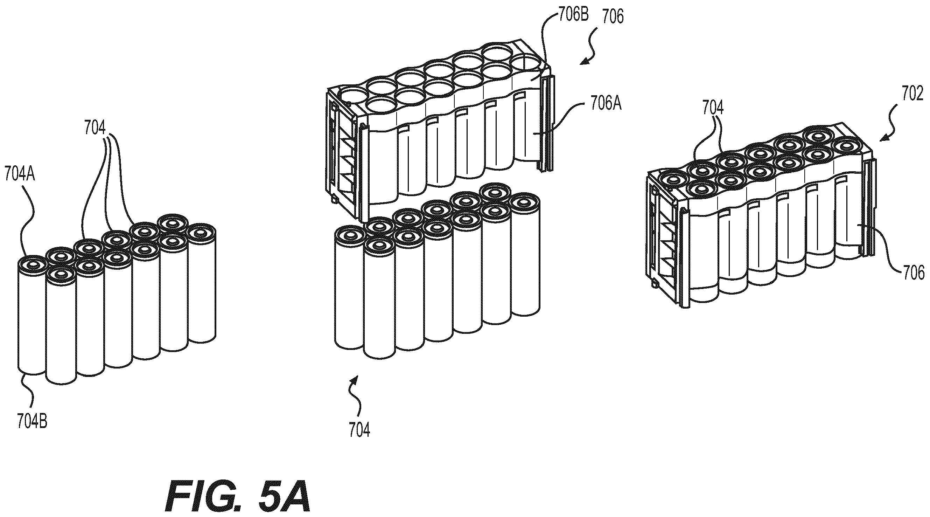

FIG. 3 illustrates an exemplary battery module 40 of a battery pack 20 with its cover (and other components) removed. In some embodiments, battery module 40 includes a first and second battery block 502 attached to a cooling plate 504 (e.g., using fasteners, adhesive, or other attachment mechanisms). In some embodiments, cooling plate 504 may be a cold plate with a cooling fluid (e.g., a liquid coolant) circulated therethrough. Each block 502 includes a collection of battery cells (cells 704 described later), each having a positive terminal and a negative terminal. As can be seen, for example, in FIG. 5A, in some embodiments, each battery cell (cell 704 of FIG. 5A) may be a cylindrical battery cell having a positive terminal and a negative terminal at opposite ends. Each battery block 502 includes a bottom surface 502A and a top surface 502B. The battery cells of each block 502 are arranged such that the negative terminals of each battery cell in the panel 502 collectively form the bottom surface 502A, and the positive terminals of each cell collectively form the top surface 502B. Thus, in each block 502, the bottom surface 502A is its negative charged surface and the top surface 502B is its positive charged surface. The bottom surface 502A (i.e., the negative charged surface) of one battery block 502 is attached on one side of cooling plate 504 and the bottom side 502A of the second battery block 502 is attached on the opposite side of the cooling plate 504 as shown in FIG. 3. In this configuration, the negative terminals of each battery cell in blocks 502 is positioned proximate, or in physical or thermal contact with, a surface of cooling plate 504. In this configuration, the battery cells of blocks 502 are cooled via their negative terminals. In some embodiments, the bottom surface 502A of the battery block 502 sits flush with, or is in physical contact with, the attached surface of the cooling plate 504. It should be noted that, the terms "top," "bottom," etc. are used only for ease of description. As evident from FIG. 3, a surface described as a "top" surface may not necessarily be above a surface described as a "bottom" surface.

Each battery cell includes a current interrupt device (CID) positioned inside its casing proximate its positive terminal. The CID is typically employed to provide protection against any excessive internal pressure increase in the battery cell by interrupting the current path from the battery cell when pressure inside its casing is greater than a predetermined value. The CID typically includes first and second conductive plates in electrical communication with each other. The first and second conductive plates are, in turn, in electrical communication with an electrode and a terminal of the battery cell, respectively. The second conductive plate separates from (e.g., deforms away or is detached from) the first conductive plate of the CID when pressure inside the battery is greater than a predetermined value, whereby a current flow between the electrode and the terminal is interrupted. The gap between the first and second conductive plates also allows the high pressure gases from inside the casing of the battery cell to vent or escape to the outside. In some cases, the first and second conductive plates of the CID are formed of different materials that expand differently when heated to cause the two plates to separate from each other. For example, when the temperature of the battery cell exceeds a threshold (for example, due to a defect in the battery cell), the bi-metallic conductive plates of the CID deflects or bends (e.g., due to different thermal expansions of the materials of the bi-metallic disc) and cuts the battery cell off from the circuit.

Since the battery cells of battery module 40 are oriented such that only their negative terminals contact the cooling plate 504, the ability of the battery cells to vent via their CIDs positioned proximate their positive terminals remains unaffected. In contrast, if the battery cells were arranged such that their positive terminals contact the cooling plate 504, the ability of cells to vent via their CIDs may be negatively affected. Additionally, the positive terminal of a battery cell includes a protrusion that projects from an end surface of the battery cell (see battery cell 704 of FIG. 5A). If the positive terminal of the battery cell were positioned in contact with the cooling plate 504, only the protrusion will make contact with the cooling plate 504, thereby reducing the surface area of the battery cell contacting the cooling plate 504, and resulting in reduced cooling of the battery cell. Thus, orienting each battery cell of the panels 502 such that the negative terminal of each cell is proximate or in contact with cooling plate 504 allows the cells to be adequately cooled without affecting their ability to vent.

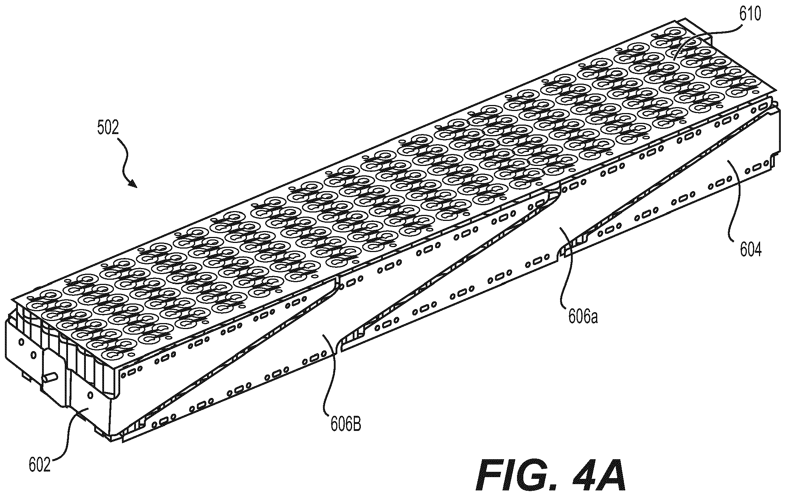

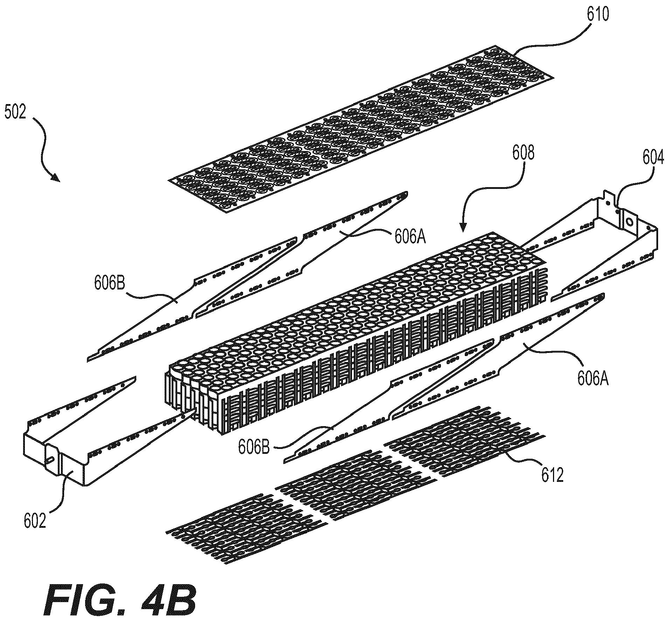

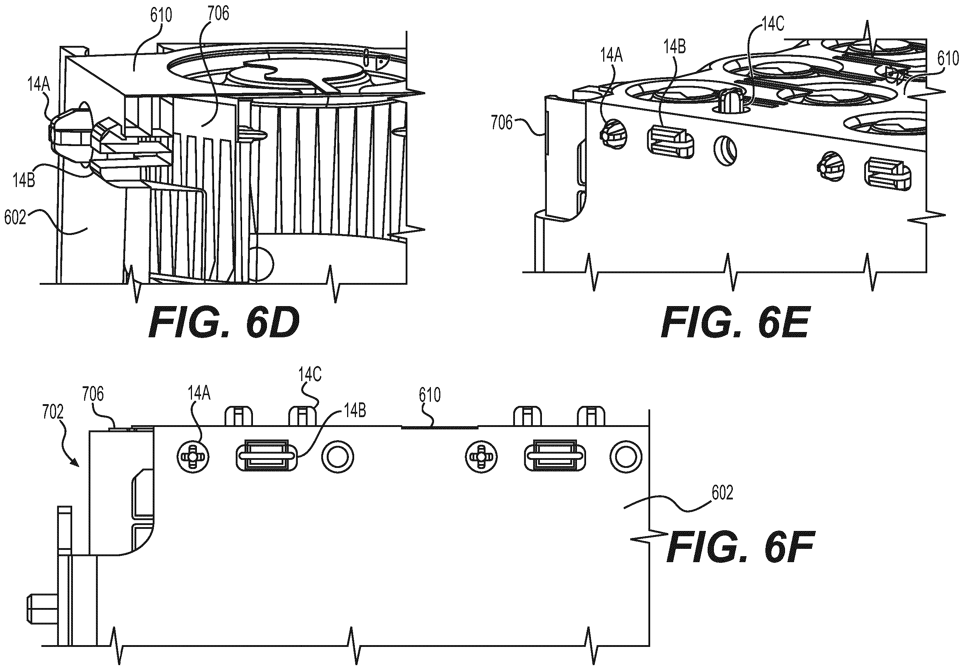

FIGS. 4A and 4B illustrate an exemplary battery block 502 according to one embodiment of the present disclosure. FIG. 4A shows a perspective view of battery block 502, and FIG. 4B shows an exploded view. In the discussion that follows, reference will be made to both FIGS 4A and 4B. Battery block 502 includes a positive exterior collective plate (ECP) 602, a negative ECP 604, one or more pairs of spanner ECPs 606A, 606B, a cassette array 608 including one or more cassettes containing battery cells, one or more positive conductive foils 610, and one or more negative conductive foils 612. As can be seen in FIG. 4B, the positive and negative conductive plates 602, 604 may be a C-shaped component that includes an end surface that contacts an end surface of the cassette array 608 and side surfaces (e.g., wedge-shaped surfaces in FIG. 4B) that contact a portion of the side surfaces of the array. In some embodiments, the positive and negative conductive plates 602, 604 may be substantially similarly (or identically) shaped. The spanner ECPs 606A, 606B may also be identically shaped and may contact portions of the side surface of cassette array 608. As indicated in FIG. 4B, a pair of each spanner ECPs 606A, 606B may be positioned on opposite side surfaces of the battery block 608. In the context of the current disclosure and for ease of explanation, the negative exterior collective plate (ECP) 602, positive ECP 604, and the one or more pairs of spanner ECPs 606a-606b will be collectively referred to as the "exterior collective plates" or ECPs. ECPs may, in general, be made of any electrically conductive material, such as, for example, aluminum. As will be described later with reference to FIGS 6D-6F, ECPs include features (slots, etc.) that engage with corresponding features in the cassettes 702 of block 608 to attach the ECPs to the block 608. As will be described later, the ECPs connect groups of parallel-connected cassettes 702 of the cassette array 608 electrically in series.

FIGS. 5A-5C depict the assembly of the exemplary battery cassette array 608 of block 502 (see FIG. 4B) according to some embodiments. As noted above, battery cassette array 608 may include one or more battery cassettes 702 coupled together. FIG. 5A depicts an assembly of an exemplary battery cassette 702 according to some embodiments. A battery cassette 702 includes a plurality of battery cells 704 and a casing 706. Although not a requirement, in some embodiments, battery cassette 702 includes 12 battery cells 704 as shown in FIGS. 5A. The battery cells 704 are oriented such that the positive terminal 704A of each battery cell 704 is aligned in the same direction. Accordingly, the negative terminal 704B of the battery cells 704 are also aligned in the same direction. The aligned battery cells 704 are then inserted into casing 706 to securely hold the battery cells 704 in place and form a battery cassette 702. Casing 706 may include a rigid sleeve 706A (e.g., a plastic sleeve) that includes cavities that support the cells 704 and a compliant rubber seal 706B that retains each cell 704 in the sleeve 704A by, for example, interference fit. The seal 706B also allows the cells 704 to vent via their CID proximate the positive charge end 704A.

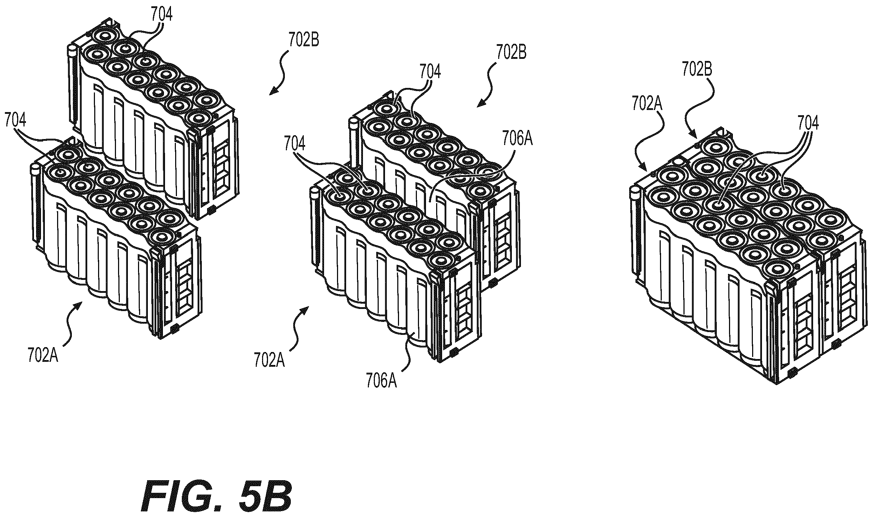

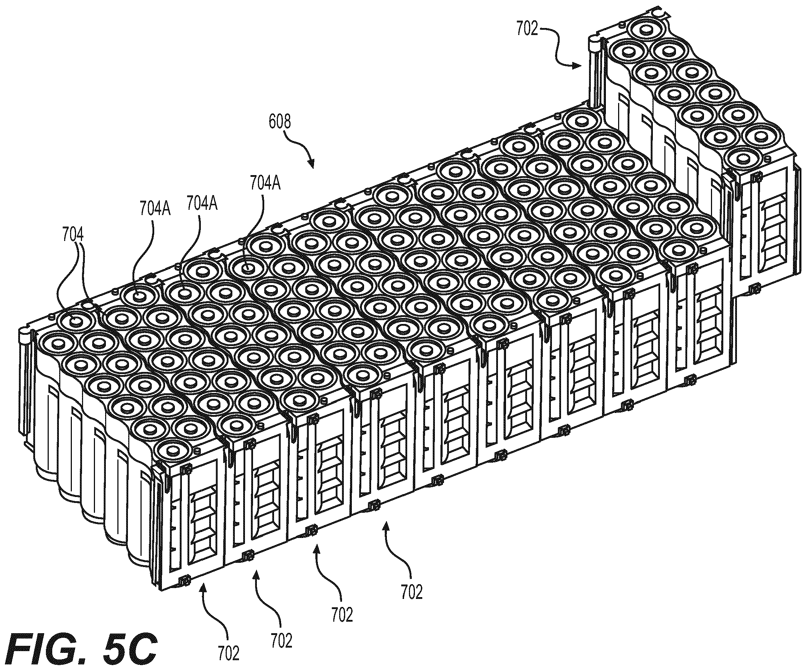

FIG. 5B shows two battery cell cassettes 702A, 702B being coupled together, according to an embodiment of the present disclosure. As shown in FIG. 5B, the exterior surface of the sleeve 706A of the battery cell cassettes 702A, 702B are contoured, or include features, to enable one cassette 702A to mate, engage, and couple with (e.g., removably couple with) another cassette 702B. For example, the exterior of the sleeve 706A of one cassette 702A may include grooves, or other features, that correspond with features on the exterior surface of sleeve 706A of a second battery cassette 702B. These mating features allow the two battery cell cassettes 702A, 702B to align and couple with each other such that a battery block 608 (see FIG. 5C) is formed with the battery cells 704 in the cassettes 702 oriented and aligned as desired. In some embodiments, the cassettes 702A, 702B slide together in a tongue and groove configuration with snap-fit final engagement. The cassettes 702A, 702B are removably coupled to each other such that they can be coupled to each other and separated from each other using their mating engagement features. Cassettes 702A, 702B may also include mating and datum features to control tolerance stack of the block 608. Multiple cassettes 702 are joined together in a similar manner to form battery cassette array 608, as shown in FIG. 5C. In the embodiment illustrated in FIG. 5C, nine (9) cassettes 702, with 12 battery cells 704 each, are joined together to form cassette array 608. However, this is only exemplary, and any number of cassettes 702 can be joined together in a similar manner to form blocks 708 with different energy capacities. Adding additional cassettes 702 to array 608 increases the energy capacity of the cassette array 608. As will be described later, the voltage output (and consequently the current output) of a cassette array 608 can also be varied independent of its energy capacity by changing the number of battery cassettes 702 that are connected together in parallel, and the number of parallel-connected cassettes connected together in series.

As can be seen in FIG. 5C, the positive terminal 704A of each battery cell 704 of block 608 is oriented in the same direction thus enabling the opposite negative terminal 704B (not seen in FIG. 5C) of the cells 704 to contact the cooling plate 504 as described with reference with FIG. 3. The ability to easily add on multiple cassettes 702 to form battery cassette array 608 (and add additional cassettes 702 to the array 608 to extend the block 502) enables the energy and voltage to be scaled in a flexible manner. After the cassette array 608 with the desired number of cassettes 702 is formed, a block 502 (see FIG. 3, 4A and 4B) may be formed by assembling the positive and negative conductive foils 610, 612 and the ECPs 602, 604, 606A, 606B, etc. with the cassette array 608 The number of ECPs, specifically the number of inner spanner ECPs 606A, 606B, etc. may be adjusted according to the number of cassettes 702 included in the battery block 608 and the desired energy and voltage, as will be described in further detail below.

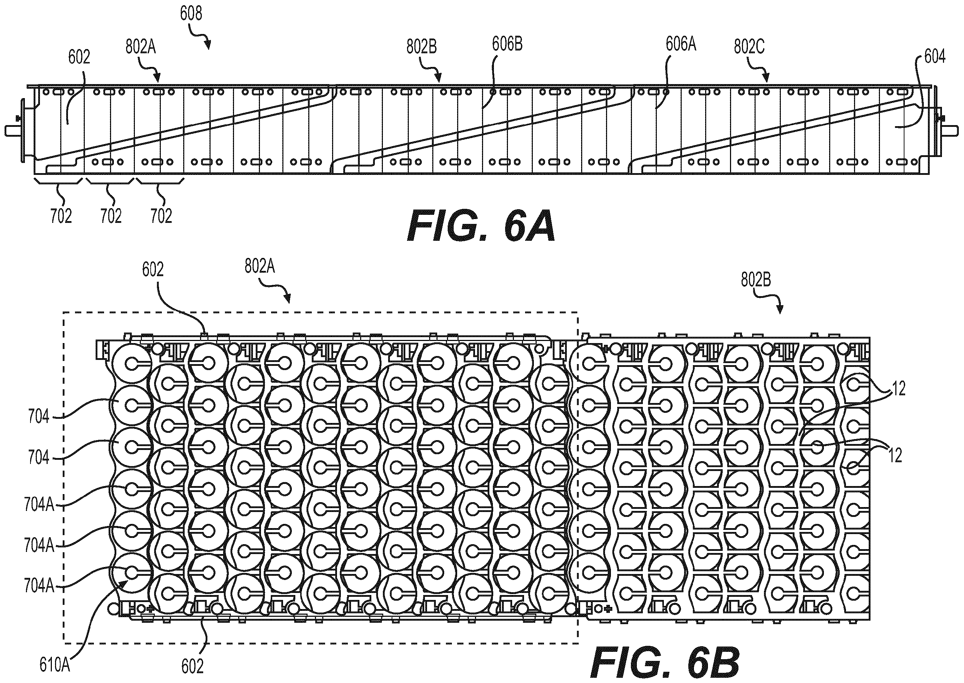

FIG. 6A illustrates the side view of an exemplary embodiment of battery block 502 of FIG. 3. As can be seen more clearly in FIG. 4B, battery block 502 includes a battery cassette array 608 that comprises multiple cassettes 702 coupled together (as described with reference to FIGS. 5A-5C). The cassettes 702 that form battery cassette array 608 may be subdivided into a plurality of battery bricks depending on the desired energy/voltage. For example, with reference to FIG. 6A, a battery cassette array 608 formed using 18 battery cassettes 702 may be subdivided into three battery bricks 802A-802C, with each battery brick 802A-802C including 6 battery cassettes 702. The cells 704 in the cassettes 702 of each battery brick 802A-802C may be connected together in parallel (by positive and negative conductive foils 610, 612). As explained previously with reference to FIGS. 3, 4B, and 5A, the battery cells 704 of each block 502 are arranged such that the negative terminals 704B of the battery cells 704 in the panel 502 form bottom surface 502A, and the positive terminals 704A of the cells 704 form top surface 502B. A positive conductive foil 610 is positioned on the top surface 502B of the cassette array 608 to electrically connect the positive terminals 704A of each battery cell 704 in a brick (e.g., brick 802A) to one ECP (e.g. ECP 602), and a negative conductive foil 612 is positioned on the bottom surface 502A of the block 608 to electrically connect the negative terminals 704B of the same brick (i.e., brick 802A) to another ECP (e.g. spanner ECP 606B). The cells 704 of each brick 802A-802C are similarly connected to ECPs. Thus, the battery cells 704 of each brick 802A-802C are connected in parallel to an ECP using positive and negative conductive foils 610, 612.

Positive and negative conductive foils 610, 612 may include conductive traces (e.g., formed on an insulating substrate or base material) that connect the positive and negative terminals 704A, 704B of each cell 704 to the respective ECP. In some embodiments, one single positive conductive foil 610 (or negative conductive foil 612) may connect the positive (or negative) terminals of each brick 802A-802C) to their respective ECPs. For example, FIG. 4B illustrates a single positive conductive foil 610 (that includes electrically isolated portions) that is used to connect the positive terminals of the cells of the different bricks 802A-802C to different ECPs. However, this is only exemplary, and multiple positive and/or negative conductive foils 610, 612 may be provided. For example, FIG. 4B illustrate three separate negative conductive foils 612 that are used to connect the negative terminals of the three bricks 802A-802C to their respective ECPs. Thus, the ECPs 602, 604, 606A, 606B (etc.) and the positive and negative conductive foils 610, 612 together form electrical collection elements that electrically connect the bricks 802A-802C of cassette array 608 together. That is, the foils 610, 612 connect the cells 704 of the cassettes 702 that are part of each brick 802A-802C in parallel, and the ECPs connect the parallel-connected bricks 802A-802C in series. In other words, each brick 802A-802C includes multiple parallel-connected cassettes 702 (containing cells 704), and each cassette array 608 includes multiple bricks 802A-802C connected together in series.

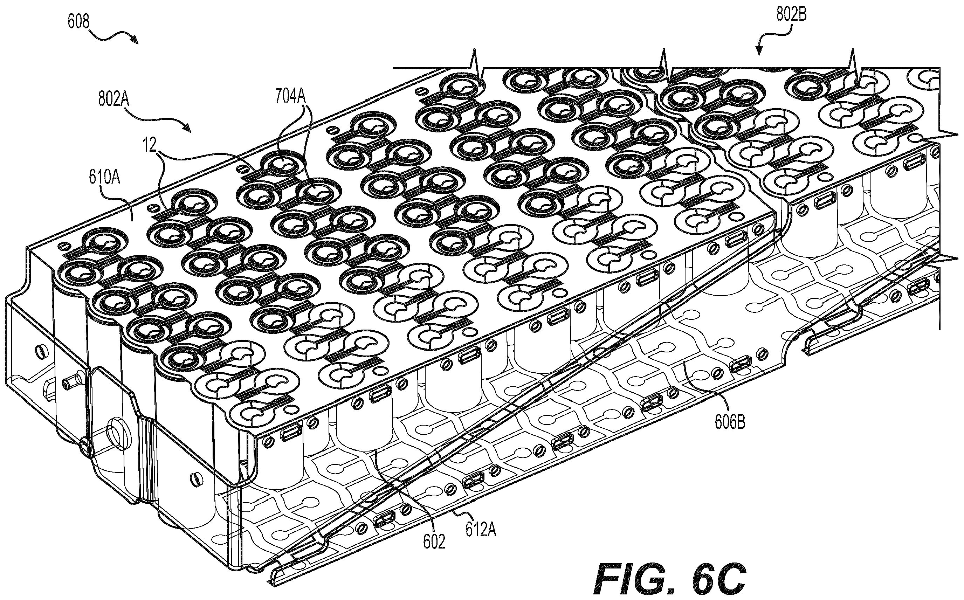

FIG. 6B is a bottom view of a portion of battery block 502 of FIG. 6A identifying brick 802A using dashed lines. And, FIG. 6C is a perspective view of a portion of block 502 showing brick 802A. In the discussion below, reference will be made to both these figures. It should be noted that some components in these figures have been removed, or are illustrated as transparent, to show features behind these components. As shown in FIGS. 6B and 6C, conductive traces 12 on a first positive conductive foil 610A (in embodiments where positive conductive foil 610 of FIG. 4B is includes multiple parts) electrically connect the positive terminals 704A of the battery cells 704 in brick 802A in parallel to ECP 602. In a similar manner, the battery cassettes 702 within each battery brick 802A-802C may be electrically connected in parallel. The ECPs may then connect each battery brick 802A-802C in series as best seen in FIG.6A. Referring now to FIGS. 6B and 6C, traces 12 on the positive conductive foil 610A positioned on the top surface of battery brick 802A connects (e.g., in a serpentine manner) the positive terminals 704A of each battery cells 704 within battery brick 802A in parallel. Positive conductive foil 610A may be electrically connected to the positive ECP 602 to form positive charge of brick 802A. In a similar manner, a negative conductive foil 612A (shown in FIG. 6C) positioned on the bottom surface of the battery brick 802A may connect (e.g., in a serpentine manner) the negative terminal 704B of each battery cell 704 within the battery brick 802a in parallel. The negative conductive foil 612A may be electrically connected to an adjacent spanner ECP 606B to form the negative charge of brick 802A. In a similar manner, positive and negative conductive foils positioned on top and bottom surfaces of each brick 802A-802C connect the positive and negative terminals 704A, 704B of the cells 704 of the respective brick 802A-802C to two ECP to form their respective positive and negative charge. As can be seen in FIGS. 6A and 6C, the spanner ECP 606B electrically connects the negative charge of battery brick 802A to a positive charge of adjacent battery brick 802B, thereby connecting the two battery bricks 802A and 802B in series. More specifically, the spanner ECP 606B may be electrically connected to a positive conductive foil 610 applied to a top surface of the battery brick 802B, where the positive conductive foil 610 connects the positive terminals 704A of battery cells 704 within the battery brick 802B in parallel. This same concept applies to all battery bricks 802A-802B, until a negative charge of the last battery brick, for example, battery brick 802C, is electrically connected to negative ECP 604 (see FIG. 4A).

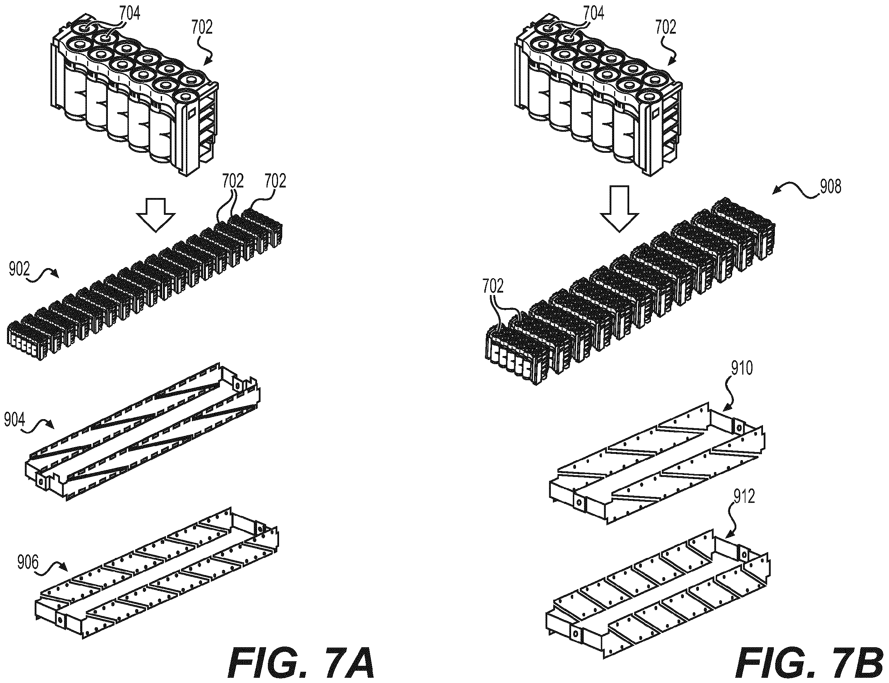

As shown in FIGS. 6A-6C, the battery bricks 802A-802C that are connected together in series are not physically separated. For example, the casings 706 (see FIG. 5A) of adjacent battery cassettes 702 of adjoining battery bricks (e.g., bricks 802A-802B, and 802B-802C) are still physically connected. Rather, the battery bricks 802A-802C are defined by the positive foil 610, the negative foil 612, and the ECPs that are connected to it. Accordingly, the voltage of the battery block may be determined by the positive foil, the negative foil, and the exterior collector plates, as will be described in further detail below with reference to FIGS. 7A-7B. For example, as explained previously, the cassette array 608 illustrated in FIG. 6A is divided into three bricks 802A-802C that are connected in series. This configuration can be easily changed by changing the foils 610, 612 and ECPs. For example, block 608 of FIG. 6A can be configured to have, for example, six bricks (with 3 cassettes per block), by providing six positive and negative foils 610, 612 and different ECPs to connect to each foil.

The foils 610, 612 and ECPs 602, 604, 606A, 606B (etc.) may be coupled to the cassettes 702 of cassette array 608 in any manner. In some embodiments, battery cassettes 702 may include features to attach to the positive and negative conductive foils 610, 612 and/or the ECPs 602, 604, 606A, 606B, etc. to form block 502. In some embodiments, as seen in FIGS. 6D-6F, the features may include keying, alignment and locking features 14A, 14B, 14C, etc. on the casings 706 of cassettes 702 that engage with corresponding features (slots, etc.) on ECPs and/or the foils 610, 612 to couple the ECPs and/or the foils 610, 612 to cassette array 608. For example, protrusions on the cassettes 702 (e.g., on casings 706 of cassettes 702) that form cassette array 608 may engage with (or fit into) slots or cavities in the ECPs and/or the foils 610, 612 to couple the ECPs and/or the foils 610, 612 to the cassette array 608. These protrusions and slots may be configured or shaped such that the ECPs and/or the foils 610, 612 are oriented in the desired manner on cassette array 608.

The energy or capacity of a cassette array (e.g., cassette array 608 of FIG. 6A) is determined by the number of cassettes 702 used to form the array. That is, cassette array 608 formed using 18 cassettes 702 (each cassette 702 having 12 battery cells 704) has a fixed energy based on the energy of each battery cell 704. The energy of the block can be changed by changing the number of cassettes. That is, adding cassettes 702 to a cassette array 608 increases its energy and removing cassettes 702 from a cassette array 608 decreases its energy. The voltage of a block is determined by the number of bricks that are connected in series in the block (by subdividing the block using foils and ECPs). For example, cassette array 608 of FIG. 6A that includes three blocks 808A-808C connected in series may have a voltage of 24 Volts (V). By changing the number of bricks in cassette array 608, the voltage (and current) output of the cell array 608 may be changed.

FIGS. 7A and 7B illustrate how a battery block having the same capacity or energy can be configured to provide voltage outputs. FIGS 7A illustrates a battery cassette array 902 formed using 18 battery cassettes 702 (each including 12 battery cells 704) being used to provide and output of 24 volts and 48 volts based on the configuration of ECPs. In order to provide an output of 24 volts, the battery cassette array 902 is divided into three battery bricks and ECPs 904 are provided accordingly. Specifically, each battery brick includes 6 battery cassettes with the battery cells of each battery brick connected together in parallel. Although not shown in FIG. 7A, positive and negative foils of block 902 are configured to connect the battery cells of each brick in parallel to an ECP. And, the ECPs 904 are configured to electrically connect the three battery bricks in series. The ECPs 904 may include a negative ECP, a positive ECP, and two spanner ECPs, as described previously and as shown in FIG. 7A.

Using the same the battery cassette array 902, an output voltage of 48 volts may be provided based on a different configuration of ECPs 906 (and foils). Specifically, in order to provide 48 volts (and a correspondingly lower current), the same battery cassette array 902 (i.e., with 18 battery cassettes 702) is divided into six battery bricks with ECPs 906 connecting the six bricks in series. Specifically, each battery brick now includes 3 battery cassettes, and the ECPs 906 are configured such that the six battery bricks are electrically connected together in series. Thus, by changing the number of battery bricks that are connected in series, a battery cassette array 902 that has the same energy capacity is configured to provide a different system voltage (and current). The ECPs include a negative ECP, a positive ECP, and four spanner ECPs, as shown in FIG. 7A.

FIG. 7B shows an embodiment in which a battery cassette array 908 including 12 battery cassettes may be used to provide an output of 24 volts or 48 volts. Since the number of cassettes 702 in cassette array 908 is lower than that in block 902 of FIG. 7A, the capacity of energy of cassette array 908 is lower than that of cassette array 902. In order to provide an output of 24 volts, the battery cassette array 908 is divided into three battery bricks with 4 battery cassettes 702 each. And, the ECPs 910 are arranged to connect the three battery bricks electrically in series. As shown in FIG. 7B, the ECPs 910 include a negative ECP, a positive ECP, and two spanner ECPs. Using the same the battery cassette array 908, an output of 48 volts may be provided by changing the number of bricks connected in series (by a different configuration of ECPs). Specifically, in order to provide an output of 48 volts, battery cassette array 908 is divided into six battery bricks (with 2 battery cassettes each) and the ECPs 912 are arranged to connect the six bricks in series. The ECPs 912 may include a negative ECP, a positive ECP, and four spanner ECPs, as shown in FIG. 7B.

As shown in the embodiments above, the voltage and energy provided by the battery blocks may be independently scaled as desired. For example, the voltage provided by the battery block 902 shown in FIG. 7A may be scaled from 12V to 36V simply by providing a different configuration for ECPs (and foils). While the positive and negative foils are not shown in FIGS. 7A and 7B, the positive and negative foils may be provided based on the configuration of ECPs. As is well known, more battery cells indicate more energy. As such, if a certain voltage is required, yet a high level of energy is not necessary, several battery cassettes may be removed from the battery block 902 to obtain the battery cassette array 908. In such instances, the appropriate exterior collective plates, in addition to the appropriate positive and negative foils, may be applied to the obtained battery cassette array 908 for required voltage at the desired energy level. Thus, with the described architecture, the battery modules and battery packs are both scalable in voltage and energy independently. Being able to scale at both levels (voltage and energy) allows for the battery pack size to be tailored to the application and available space in the chassis for mounting batteries.

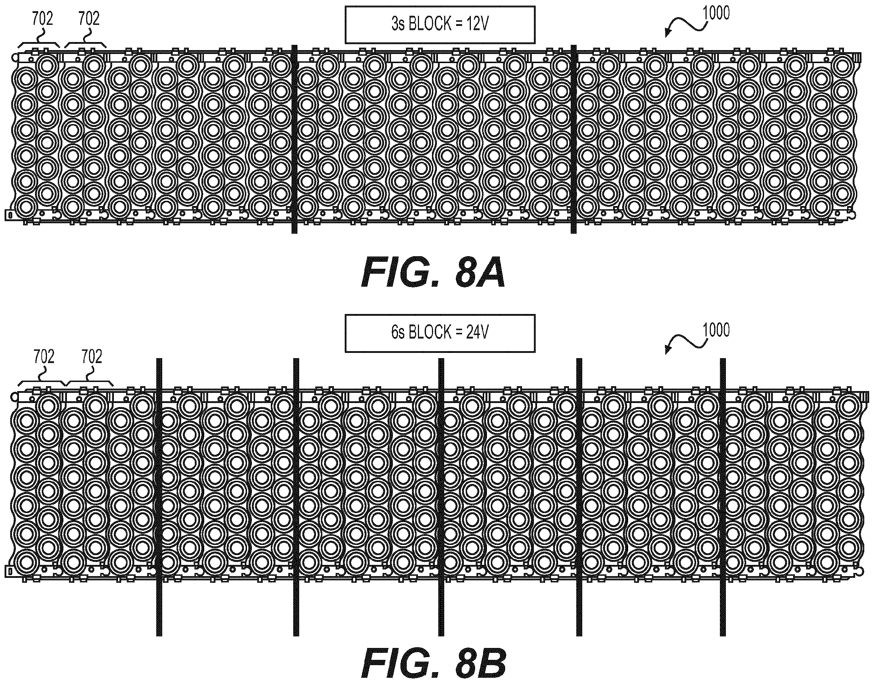

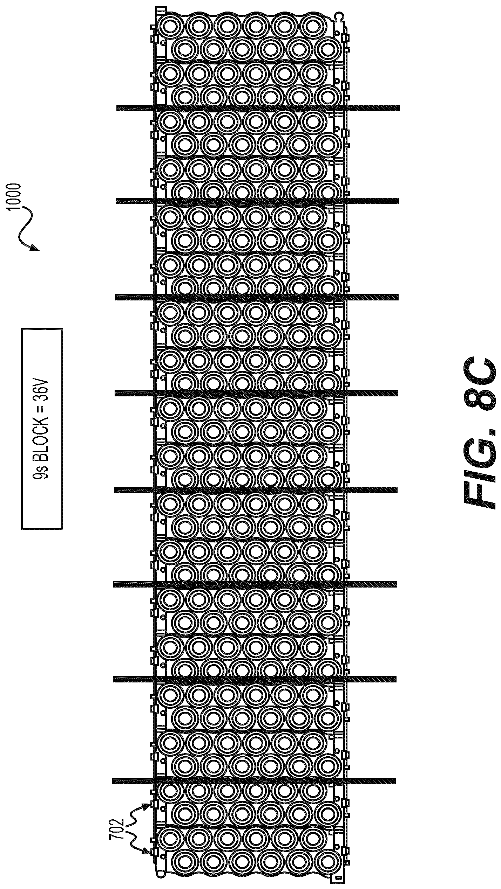

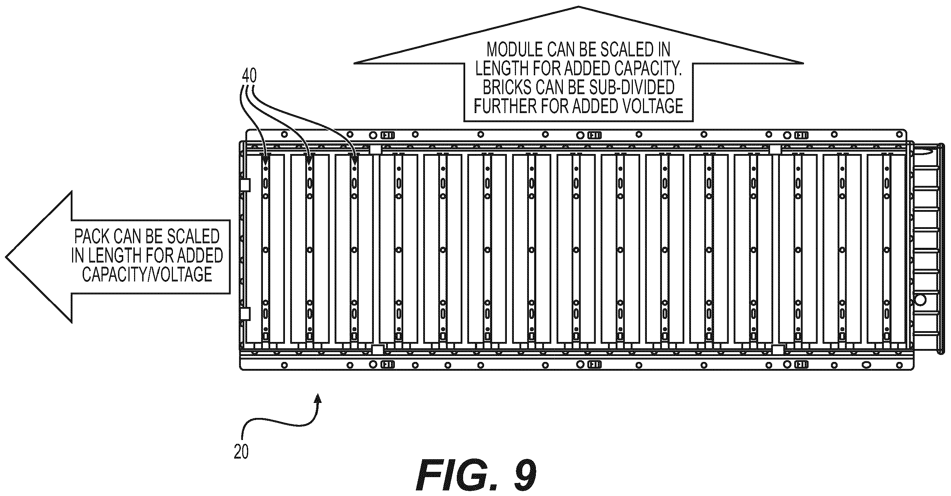

FIGS. 8A-8C show additional embodiments of battery blocks using the same sized cassette array to provide varying voltages. As shown in FIG. 8A-8C, a battery cassette array 1000 having the same number of cassettes 702 (and consequently the same energy) may be divided into three battery bricks connected in series to provide an output voltage of 12V as shown in FIG. 8A, six battery bricks connected in series to provide an output voltage of 24V as shown in FIG. 8B, or 9 battery bricks connected in series to provide an output voltage of 36V as shown in FIG. 8C. The number of cassettes 702 in the battery cassette array 1000 may be increased or decreased to increase or decrease energy capacity of a battery module. FIG. 9 illustrates how a battery module 40 and a battery pack 20 (comprising multiple battery modules 40) may be scaled in length for added capacity. As explained previously, the battery modules can be sub-divided into different number of battery bricks for changing the output voltage of the battery module and battery packs.

The ability to scale the battery pack and battery module independently for energy and voltage allows for the pack size to be more easily tailored to the application and available space in the chassis for mounting batteries. For example, while a heavy duty vehicle (such as a bus) may need a battery pack with a low output voltage relative to the energy storage needs (to provide the required range), a lighter vehicle (e.g., a light truck, car, etc.) may need a battery pack with a higher output voltage relative to the energy storage needs to meet the required range. The disclosed battery pack can be configured to meet these different applications by sub-dividing the battery module (using different ECPs and foils) into different number and size of bricks to provide the needed voltage. The ability to easily reconfigure a battery pack for different applications using the same base building blocks increases operational and engineering efficiency while reducing time to market and saving money on validation and capital equipment costs.

While principles of the present disclosure are described herein with reference to the battery system of an electric bus, it should be understood that the disclosure is not limited thereto. Rather, the systems described herein may be employed in the batteries of any application. Also, those having ordinary skill in the art and access to the teachings provided herein will recognize additional modifications, applications, embodiments, and substitution of equivalents all fall within the scope of the embodiments described herein. Accordingly, the disclosure is not to be considered as limited by the foregoing description. For example, while certain features have been described in connection with various embodiments, it is to be understood that any feature described in conjunction with any embodiment disclosed herein may be used with any other embodiment disclosed herein.

## Claims

1. A battery module, comprising:
a plurality of battery cassettes (702) removably coupled together to form a battery block (502), wherein each battery cassette includes a plurality of battery cells positioned therein;
a first set of battery cassettes of the plurality of battery cassettes electrically connected together in parallel to form a first parallel-connected brick of battery cells;
a second set of battery cassettes of the plurality of battery cassettes electrically connected together in parallel to form a second parallel-connected brick of battery cells; and
a plurality of electrical collection plates (602) connecting the first and second parallel-connected bricks of battery cells in series.

2. A battery module of claim 1, wherein each battery cell in the battery module are arranged such that a positive terminal of the battery cells are oriented in a same direction.

3. A battery module of either of claims 1 or 2, wherein a negative terminal of each battery cell of the battery module is in thermal contact with a cold plate (504).

4. A battery module of any preceding claim, wherein the first and second set of battery cassettes include the same number of cassettes.

5. A battery module of any preceding claim, wherein a number of battery cassettes in the first and second parallel-connected bricks of battery cells is configured to be changed by changing a number of the plurality of electrical collection plates (602).

6. A battery module of any preceding claim, wherein each battery cassette of the plurality of battery cassettes includes twelve battery cylindrical cells positioned therein.

7. A battery module of any preceding claim, wherein each battery cassette of the plurality of battery cassettes includes first engagement features that engage with another battery cassette of the plurality of battery cassettes to removably couple the two battery cassettes together.

8. A battery module of any preceding claim, wherein each battery cassette of the plurality of battery cassettes includes second engagement features that engage with one or more electrical connection plates of the plurality of electrical collection plates to couple the one or more electrical connection plates to the battery cassette.

9. A method of fabricating a battery module comprising:
coupling a plurality of substantially identical battery cassettes together to form a battery block (502) having a first energy capacity, wherein each battery cassette includes a plurality of battery cells (40) positioned therein;
electrically connecting the battery cells of a first set of battery cassettes of the plurality of battery cassettes in parallel to form a first parallel-connected brick of battery cells;
electrically connecting the battery cells of a second set of battery cassettes of the plurality of battery cassettes in parallel to form a second parallel-connected brick of battery cells; and
electrically connecting the first and second parallel-connected bricks of battery cells in series to form the battery module having a first voltage output.

10. A method of claim 9, including changing a number of battery cassettes in the first and second parallel-connected bricks of battery cells to change the voltage output of the battery module (40).

11. A method of either of claims 9 or 10, including increasing a number of battery cassettes removably coupled together in the plurality of battery cassettes to increase the energy capacity of the battery module.

12. A method of any of claims 9 to 11, including decreasing a number of battery cassettes removably coupled together in the plurality of battery cassettes to decrease the energy capacity of the battery module.

13. A method of any of claims 9 to 12, including further including inserting a plurality of battery cells in a casing to form a battery cassette of the plurality of battery cassettes.
